# FASCICULE DE BREVET EUROPEEN

(11) **EP 0 613 431 B1**
(45) Date de publication et mention de la délivrance du brevet: **09.08.1995**
(21) Numéro de dépôt: 92924755.9
(22) Date de dépôt: 04.11.1992
(51) Int. Cl.: B60T 13/57

(54) **SERVOMOTEUR PNEUMATIQUE**
PNEUMATIK-SERVOMOTOR
PNEUMATIC SERVO

(30) Priorité: 27.11.1991 FR 9114667
(43) Date de publication de la demande: 07.09.1994
(73) Titulaire: ALLIEDSIGNAL EUROPE SERVICES TECHNIQUES, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR)
(86) Numéro de dépôt international: FR9201020
(87) Numéro de publication internationale: WO9311012

(56) Documents cités:
- EP-A- 0 004 477
- EP-A- 0 308 310
- EP-A- 0 448 417
- DE-A- 3 836 609

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique un piston formé d'un moyeu et d'une jupe et qui, à l'aide d'une membrane déroulante définit une chambre avant reliée en permanence à une source de dépression et une chambre arrière reliée sélectivement à la chambre avant lors de l'ouverture d'un premier passage de valve ou à l'atmosphère lors de l'ouverture d'un second passage de valve, les premier et second passages de valve étant formés par des premiers coopérant avec des seconds moyens de valve, et étant actionnés par une tige de commande susceptible de s'appuyer, par l'intermédiaire d'un plongeur, sur l'une des faces d'un disque de réaction solidaire d'une tige de poussée.

De tels servomoteurs, tels qu'illustrés par exemple par le document EP-A-0 004 477, présentent quelques inconvénients. C'est ainsi que, pour éviter que la tige de commande n'ait une course morte trop longue, on est obligé de concevoir le moyen de valve de façon telle que la "levée de clapet" entre le clapet et le second siège de valve soit la plus faible possible. Il s'ensuit donc que, lors du freinage, le passage offert à l'air atmosphérique vers la chambre arrière est réduit, de même que le passage offert à l'air de la chambre arrière vers la chambre avant lors du défreinage. Le fonctionnement de ces servomoteurs est donc accompagné de bruits d'aspiration d'air, qui peuvent devenir gênants, d'autant plus que la structure du moyeu du piston, présentant un seul passage radial vers la chambre arrière et un seul passage axial vers la chambre avant, induit en plus des turbulences importantes dans l'air en mouvement.

Un autre inconvénient dû à ces passages d'air réduits et turbulents réside dans le fait que l'air se trouve fortement ralenti dans ses différents mouvements entre l'atmosphère, la chambre arrière et la chambre avant, et donc que les servomoteurs présentent des temps de réponse importants. Encore un autre inconvénient des servomoteurs connus réside dans le fait que l'élément de clapet annulaire présente une forme générale en tulipe avec un bourrelet extérieur pour son montage, en association avec le support d'élément de clapet, dans le moyeu tubulaire de l'ensemble de piston, la partie active de l'élément de clapet étant reliée à ce bourrelet de montage par un voile mince s'évasant vers l'extérieur pour son raccordement au bourrelet de montage. Dans un tel agencement, l'élément de voile intermédiaire de l'élément de clapet est soumis, lors de la vie utile du servomoteur, à de très nombreuses sollicitations en flexion et en compression pouvant induire à la longue une fragilisation, à cet endroit, du matériau élastomère constitutif de l'élément de clapet. De plus, en fonctionnement, cette partie de voile intermédiaire de l'élément de clapet est soumise à une différentielle de pression entre l'atmosphère régnant en permanence à l'intérieur du moyeu tubulaire, autour de la tige d'entrée, et le vide régnant en permanence dans la chambre annulaire entourant cette partie de voile intermédiaire de l'élément de clapet et reliée en permanence à la chambre avant, ou chambre à dépression du servomoteur. Cette différentielle de pression, outre qu'elle contribue à la fatigue de la partie de voile intermédiaire, induit sur la partie active de l'élément de clapet une force axiale s'ajoutant à la force du ressort de valve et que doit vaincre le plongeur de valve lors de chaque phase de relâchement du freinage pour dégager la partie active de l'élément de clapet du premier siège de clapet formé dans le moyeu et rétablir la communication entre la chambre de travail arrière du servomoteur et la chambre de dépression, ce qui impose un surdimensionnement du ressort de rappel de la tige d'entrée se traduisant notamment par un effort important à fournir par le conducteur pour la mise en oeuvre du servomoteur, cet effort étant connu dans la techniques sous le terme "d'effort d'attaque".

On connaît également, du document DE-A-3 836 609, un servomoteur pneumatique, correspondant au préambule de la revendication principale, dans lequel certains des inconvénients mentionnés ci-dessus sont évités : il ne comporte pas de clapet annulaire en forme générale de tulipe, et la course morte de la tige de commande est réduite. Il conserve néanmoins d'autres inconvénients, tels que des passages de valve réduits, générateurs de bruits d'aspiration, un seul passage radial vers la chambre arrière et un seul passage axial vers la chambre avant, générateurs de turbulences, et une section importante soumise en permanence à une différentielle de pression, imposant une surdimensionnement du ressort de rappel de la tige de commande, et résultant dans un effort d'attaque important.

La présente invention a par conséquent pour objet de prévoir un servomoteur dont le fonctionnement soit silencieux et dont le temps de réponse soit le plus faible possible, où les moyens de valve ne posent aucun problème de longévité et où la force du ressort de rappel de la tige de commande soit réduite, et ce de façon simple, fiable et économique. Dans ce but, l'invention a pour objet un servomoteur dans lequel les passages d'air entre l'atmosphère et la chambre arrière d'une part, la chambre arrière et la chambre avant d'autre part, aient la plus grande section possible sans présenter d'obstacles pouvant engendrer des turbulences.

Selon l'invention, le plongeur comporte une partie cylindrique coulissant de façon étanche autour d'une partie cylindrique de la jupe du piston, le siège de valve du second passage de valve étant formé sur le moyeu selon un cercle de diamètre égal à ou très voisin de celui de la partie cylindrique de la jupe.

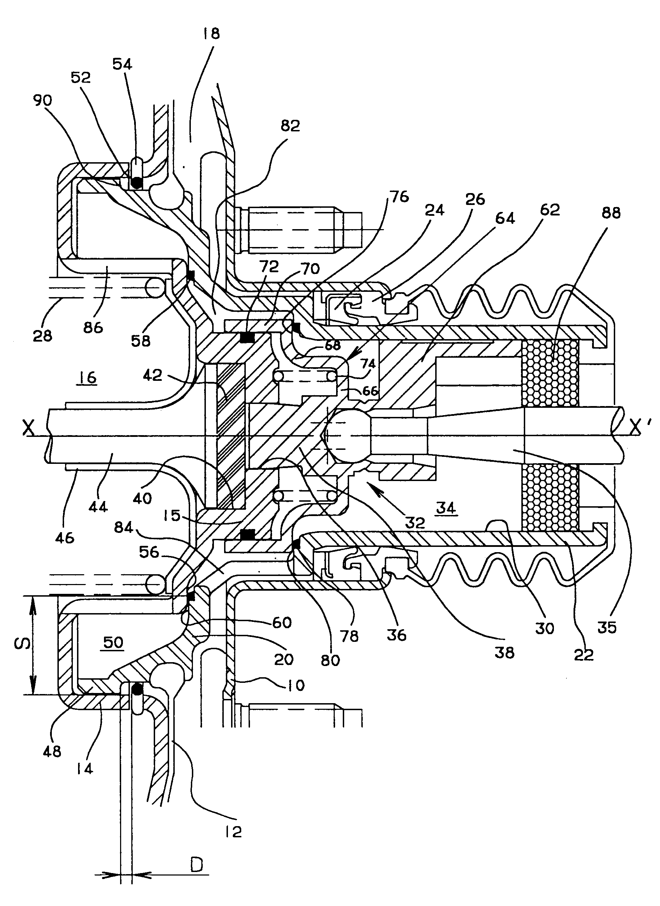

D'autres buts, caractéristiques et avantages ressortiront de la description qui suit d'un mode de réalisation de la présente invention, donnée à titre non limitatif, en référence aux dessins annexés dans lesquels :
- La Figure Unique est une vue de côté, en demi-coupe longitudinale, représentant la partie centrale d'un servomoteur pneumatique d'assistance au freinage réalisé conformément à la présente invention.

La Figure représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure comprend une enveloppe extérieure 10 en forme de coquille, présentant une symétrie de révolution autour d'un axe X-X'. Seule la partie centrale arrière de cette enveloppe 10 est représentée sur la Figure.

Une membrane déroulante souple en élastomère 12, renforcée par un disque support métallique 14 encore appelé jupe, définit a l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un moyeu de piston 20 disposé selon l'axe X-X' du servomoteur. Ce moyeu 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10.

Un ressort de compression 28 interposé entre la jupe 14 et la paroi avant (non représentée) de l'enveloppe extérieure 10 maintient normalement la jupe 14 dans une position arrière de repos illustrée sur la Figure, dans laquelle la chambre arrière 18 présente son volume minimal et la chambre avant 16 son volume maximal.

Dans sa partie arrière tubulaire 22, le moyeu 20 présente un alésage 30 dans lequel est reçu en coulissement un plongeur 32 présentant également une symétrie de révolution autour de l'axe X-X', des ouvertures 34 régulièrement réparties autour de l'axe X-X' étant prévues dans la partie arrière du plongeur 32 pour laisser le libre passage a l'air atmosphérique. L'extrémité avant d'une tige de commande 35 du servomoteur, disposée également selon l'axe X-X', est montée rotulante dans le plongeur 32. L'extrémité arrière (non représentée) de cette tige 35, qui fait saillie à l'extérieur de la partie tubulaire 22 du moyeu 20, est commandée directement par la pédale de frein du véhicule (non représentée).

La partie centrale 15 de la jupe est cylindrique et est formée avec un alésage étagé. La partie 36 de plus petit diamètre de cet alésage est située vers l'arrière et reçoit l'extrémité avant 38 du plongeur 32, et la partie 40 de plus grand diamètre de cet alésage est située vers l'avant et reçoit un disque de réaction 42 en un matériau déformable tel qu'un élastomère et l'extrémité arrière d'une tige de poussée 44 destinée à actionner un maître-cylindre (non représenté) fixé à la paroi avant de l'enveloppe 10. Une coupelle 46 pourra avantageusement être disposée entre la jupe 14 et le ressort 28 de façon à maintenir la tige de poussée 44 en place en l'absence du maître-cylindre, par exemple lors de l'assemblage du servomoteur.

Le moyeu 20 est formé avec une extrémité avant annulaire 48 reçue dans une gorge annulaire 50 formée sur la face arrière de la jupe 14. De préférence, l'extrémité 48 et une des parois de la gorge 50 ont une forme complémentaire pour assurer le guidage mutuel de la jupe 14 et du moyeu 20 lors du coulissement de l'extrémité 48 dans la gorge 50 pendant le fonctionnement du servomoteur. Un jonc 52 est disposé dans une ouverture 54 formée dans la paroi de la gorge 50 formée dans la jupe 14 et qui coopère avec l'extrémité 48 de façon à assembler la jupe 14 et le moyeu 20, tout en permettant un mouvement relatif limité de translation de ces deux pièces.

Dans la position de repos du servomoteur représentée à la Figure, la jupe 14 est sollicitée vers l'arrière par le ressort 28 et vient prendre appui sur le moyeu 20, qui vient lui-même prendre appui sur le joint d'étanchéité annulaire armé 24, qui définit ainsi la position arrière de repos de la jupe 14 et du moyeu 20. De façon plus précise, la jupe 14 est formée sur sa face arrière avec une surface annulaire plane 56 perpendiculaire à l'axe X-X' qui vient en appui sur un bourrelet élastique 58 disposé sur une surface annulaire plane 60 perpendiculaire à l'axe X-X' du moyeu 20 tournée vers l'avant. Le bourrelet 58 forme ainsi un siège de valve coopérant avec la surface 56 pour former un premier clapet.

Le plongeur 32 est formé avec une partie arrière 62 coulissant dans l'alésage 30 de la partie tubulaire 22 du moyeu 20 et la partie avant 38 coulissant dans la partie d'alésage 36 de la jupe 14. Entre les parties arrière 62 et avant 38 du plongeur 32 est venu de matière une extension 64 s'étendant d'abord radialement vers l'extérieur pour former une partie annulaire 66, puis, à partir du bord périphérique extérieur de celle-ci, axialement vers l'avant pour former une partie intermédiaire 68 de forme générale tronconique, puis, à partir du bord avant de celle-ci, axialement vers l'avant pour former une partie cylindrique 70 coulissant de façon étanche grâce à un joint 72 sur la partie centrale cylindrique 15 de la jupe 14. Avantageusement, des ouvertures seront ménagées dans la partie intermédiaire 68 pour laisser l'air à la pression atmosphérique pénétrer dans l'espace situé entre le plongeur 32 et la jupe 14.

Entre la face arrière de la partie centrale cylindrique 15 de la jupe 14 et la face avant de la partie annulaire 66 du plongeur 32 est disposé un ressort 74 sollicitant le plongeur vers l'arrière dans sa position de repos. Dans cette position, il vient en appui sur le moyeu 20. Plus précisément, la partie intermédiaire 68 est formée sur sa face arrière avec une surface annulaire plane 76 perpendiculaire à l'axe X-X' qui vient en appui sur un bourrelet élastique 78 disposé sur une surface annulaire plane 80 perpendiculaire à l'axe X-X' du moyeu 20 tournée vers l'avant. Le bourrelet 78 forme ainsi un siège de valve coopérant avec la surface 80 pour former un second clapet.

Un volume annulaire 82 se trouve donc défini par la partie du moyeu 20 située entre les deux bourrelets 58 et 78, la partie de la jupe 14 située entre le bourrelet 58 et la partie cylindrique 15 sur laquelle coulisse la partie cylindrique 70 du plongeur 32.

Des ouvertures 84 sont pratiquées dans le moyeu 20 pour faire communiquer ce volume annulaire 82 avec la chambre arrière 18 du servomoteur, et des ouvertures 86 sont pratiqués dans la jupe 14 pour faire communiquer la gorge 50 avec la chambre avant 16 du servomoteur.

Le fonctionnement du servomoteur qui vient d'être décrit va maintenant être exposé. Lorsque le servomoteur est installé sur un véhicule et est au repos, la chambre avant 16 communique en permanence avec une source de vide, et se trouve donc sous dépression, ainsi que la gorge annulaire 50 grâce aux ouvertures 86. La chambre arrière 18 est également sous dépression, qui s'est installée lors d'un actionnement antérieur du servomoteur comme on le verra par la suite. De plus, les deux clapets 56-58 et 76-78 sont tous les deux fermés.

Dans un premier temps, l'augmentation de l'effort sur la pédale de frein par le conducteur a pour effet d'égaler l'effort de précontrainte du ressort 74. Puis, le plongeur 32 avance à l'encontre de l'action du ressort 74, sa partie avant 38 coulissant dans l'alésage 36 et sa partie cylindrique 70 coulissant de façon étanche autour de la partie cylindrique 15 de la jupe 14. Dans ce mouvement du plongeur, la surface 76 perd le contact avec le bourrelet 78 et le clapet correspondant s'ouvre. De l'air à la pression atmosphérique est donc immédiatement admis dans la chambre arrière, après avoir traversé un filtre à air 88, par les ouvertures 34 de la partie arrière 62 du plongeur 32, le passage de valve 76-78, le volume annulaire 82 et les ouvertures 84 dans le moyeu 20.

Un avantage très important du servomoteur réalisé selon l'invention réside dans le fait que ce servomoteur a une course morte la plus réduite possible puisque toute la phase de fonctionnement d'un servomoteur classique qui était nécessaire à l'isolement des chambres avant et arrière est supprimée.

La seule course morte du servomoteur de l'invention est celle qui est due à l'élasticité du bourrelet 78 pour assurer l'étanchéité du passage de valve 76-78, mais elle peut être considérée comme négligeable.

On voit ainsi que, grâce à l'invention, l'air est admis dans la chambre arrière 18 à travers le passage de valve 76-78, qui est d'un diamètre plusieurs fois plus grand que dans un servomoteur classique.

Il s'ensuit que la section de passage offerte à l'air en mouvement est multipliée par le même facteur. On obtient donc bien un servomoteur dont le fonctionnement est silencieux puisqu'une telle section de passage agrandie permet à l'air de circuler sans provoquer de bruits d'aspiration et autres sifflements. De plus, l'invention permet de prévoir que les ouvertures 34 et 84 soient en nombre égal et régulièrement réparties autour de l'axe X-X', et de sorte que leurs centres soient dans un même plan. De la sorte, les masses d'air mises en mouvement lors du fonctionnement du servomoteur de l'invention auront une vitesse dont les composantes ne seront contenues que dans ce plan. En d'autres termes, l'écoulement de l'air dans le servomoteur est parfaitement symétrique autour de l'axe X-X', c'est-à-dire que toutes les turbulences sont éliminées, ainsi que les bruits en résultant.

A la fin de cette première phase d'actionnement, de l'air à la pression atmosphérique est présent dans la chambre arrière 18, et une différentielle de pression s'exerce sur toute la surface de la jupe 14, sauf sur la surface annulaire S comprise entre la circonférence de l'extrémité avant cylindrique 48 du moyeu 20 et la circonférence correspondant au contact du bourrelet 58 sur la surface 56 de la jupe 14, la différentielle de pression s'exerçant sur cette surface S du moyeu.

En choisissant judicieusement la valeur de cette surface S, ainsi que celle de la raideur du ressort 74, l'ensemble jupe 14 - moyeu 20 va se déplacer sous l'effet de cette différentielle de pression créant une force d'assistance.

Un tel déplacement est transmis à la tige de poussée 44 par le disque de réaction 42.

Au cours de cette deuxième phase d'actionnement des freins, la force d'assistance exercée par le moyeu 20 ne déforme pas suffisamment le disque de réaction 42 pour que ce dernier remplisse totalement l'espace qui le sépare initialement du plongeur 32.

Par conséquent la force de sortie appliquée au maître-cylindre par la tige de poussée 56 augmente brutalement, alors que la force exercée sur la tige de commande 35 reste inchangée.

Cette augmentation brusque de l'effort de sortie correspond à ce qu'on appelle le saut du servomoteur, c'est-à-dire le seuil au delà duquel la force d'assistance engendrée dans le servomoteur et exercée sur le disque de réaction 42 par le moyeu 20 devient suffisante pour que la face avant du plongeur vienne au contact du disque de réaction 42.

Le déplacement d'ensemble de la jupe 14 et du moyeu 20 a également eu pour effet de ramener le bourrelet 78 porté par le moyeu 20 sur la surface 76 de la jupe 14. Toute augmentation ultérieure de l'effort exercé par le conducteur sur la tige d'entrée 35 fera se réouvrir le passage de valve 76-78, pour admettre une quantité supplémentaire d'air à la pression atmosphérique dans la chambre arrière 18, ce qui a pour effet une augmentation de la force d'assistance exercée sur la tige de poussée 44 et une augmentation de la réaction à la pédale exercée par le disque 42 sur le plongeur 32, alors au contact l'un de l'autre.

Lorsque le conducteur du véhicule désire réduire ou mettre fin à son action de freinage, il diminue son effort sur la pédale de frein. La tige d'entrée 35 recule alors et entraîne dans son mouvement le plongeur 32, qui vient en butée par sa surface 76 sur le bourrelet 78, et entraîne avec lui le moyeu 20. Ce mouvement fait alors perdre le contact entre le bourrelet 58 porté par le moyeu 20 et la surface 56 de la jupe 14, ouvrant ainsi le passage de valve 56-58.

L'air contenu dans la chambre arrière 18 est alors aspiré dans la chambre avant 16 par le passage de valve 56-58, la gorge 50 et les ouvertures 86. Pour permettre un ré-equilibrage rapide de pression (en l'occurrence de dépression) entre les deux chambres 16 et 18, le passage de valve est autorisé à s'ouvrir d'une quantité relativement importante, c'est-à-dire que le moyeu 20 est mobile en translation axiale par rapport à la jupe 14 et peut reculer d'une distance prédéterminée D entre le jonc 52 porte par la jupe 14 et un épaulement 90 du moyeu 20 tourné vers le jonc 52.

On voit donc que là encore l'air est amené à s'écouler à travers le passage de valve 56-58, d'un diamètre nettement supérieur aux passages de valve classiques permettant à l'aide d'une section de passage importante un débit également supérieur, d'où il résulte un temps de réponse réduit en phase de défreinage.

L'invention permet de plus d'obtenir un avantage très important. En effet, le clapet habituel en forme de tulipe avec sa partie de voile intermédiaire, partie soumise en permanence à des sollicitations qui la fragilisent, est remplacé par la présente invention par deux bourrelets 58 et 78 formant valve avec les surfaces 56 de la jupe 14 et 76 du plongeur 32. Le servomoteur selon la présente invention est donc nettement plus fiable que les servomoteurs classiques.

De plus, au début de la phase de défreinage, la force que doit vaincre le plongeur 32 pour ouvrir le passage de valve 56-58 est celle qui est due à la différentielle de pression s'exerçant sur la surface S définie précédemment, diminuée de la force exercée par le ressort 74. Puis, en phase de défreinage, la seule surface sur laquelle s'exerce une différentielle de pression induisant une force axiale qui s'oppose au retour de la jupe 14, est constituée par celle de la partie centrale cylindrique 15 de la jupe 14 dont la face arrière est toujours soumise à la pression atmosphérique, et la face avant est toujours soumise à la pression régnant dans la chambre avant 16.

De même lorsque le servomoteur est au repos, la surface de l'ensemble sur laquelle s'exerce une différentielle de pression, c'est-à-dire celle sur laquelle la dépression présente dans le servomoteur s'applique, est délimitée par le bourrelet 78. On voit donc que, en disposant le bourrelet 78 sur le moyeu 20 de façon à ce qu'il vienne s'appliquer sur la surface 76 selon un cercle de diamètre égal à ou très voisin de celui de la partie cylindrique 15 de la jupe 14, comme on l'a représenté à la Figure, la surface sur laquelle s'exerce une différentielle de pression, et qui est en quelque sorte "aspirée", est constante, que le servomoteur soit au repos ou en phase de défreinage. Il en résulte une caractéristique très importante du servomoteur selon l'invention, à savoir que l'effort à exercer sur le plongeur pour actionner le servomoteur est égal à celui qu'on exerce sur lui en phase de défreinage, ou, selon les termes utilisés dans la technique, l'effort d'attaque est égal à l'effort de retour.

C'est cette caractéristique qui permet de réduire très sensiblement la précontrainte du ressort 74. En effet, comme on l'a expliqué en introduction, la présence d'un clapet annulaire en forme de tulipe dans les servomoteurs classiques implique une surface "aspirée" nettement supérieure en phase de repos à celle qui existe en phase de défreinage. C'est pourquoi la précontrainte du ressort de rappel de la tige d'entrée doit être importante, et c'est pourquoi l'effort d'attaque est notablement supérieur à l'effort de retour. Grâce à l'invention, il est maintenant possible de réaliser un servomoteur où la précontrainte du ressort 74 peut être diminué, avec les conséquences favorables qui en découlent pour l'effort d'attaque.

On notera encore un autre avantage de la constitution tout à fait particulière du servomoteur de l'invention. En effet, on voit que le ressort 74 constitue le ressort de rappel de la tige de commande 35. De plus, étant disposé entre le plongeur 32 et la jupe 14, il joue le rôle d'un ressort de clapet.

On voit donc que l'invention permet de réduire le nombre de pièces nécessaires au fonctionnement du servomoteur. Celui-ci n'en sera donc que plus facile à assembler, et donc d'autant moins coûteux et plus fiable.

On voit donc bien qu'on a réalisé conformément à la présente invention un servomoteur pneumatique dans lequel la disposition particulière des sièges de valve lui permet de fonctionner silencieusement, avec des temps de réponse très brefs, un effort d'attaque réduit et une grande fiabilité des moyens de valve. Bien entendu, l'invention n'est pas limitée au mode de réalisation qui a été décrit à titre d'exemple, mais est susceptible de recevoir de nombreuses variantes qui apparaîtront à l'homme du métier.

C'est ainsi par exemple que l'invention pourra être appliquée à des servomoteurs en tandem ou à chambre additionnelle. C'est ainsi aussi que les bourrelets formant valve pourront être formés sur le plongeur et sur la jupe et coopérer avec des surfaces annulaires formées sur le moyeu.

## Revendications

1. Servomoteur pneumatique d'assistance au freinage comportant une enveloppe (10) à l'intérieur de laquelle se trouve un piston formé d'un moyeu (20) et d'une jupe (14) et qui, à l'aide d'une membrane déroulante (12) définit une chambre avant (16) reliée en permanence à une source de dépression et une chambre (18) arrière reliée sélectivement à la chambre avant (16) lors de l'ouverture d'un premier passage de valve (56, 58) ou à l'atmosphère lors de l'ouverture d'un second passage de valve (76, 78), les premier et second passages de valve (56, 58, 76, 78) étant formés par des sièges de valve (58, 78) coopérant avec des surfaces annulaires de valve (56, 76), et étant actionnés par une tige de commande (35) susceptible de s'appuyer, par l'intermédiaire d'un plongeur (32), sur l'une des faces d'un disque de réaction (42) solidaire d'une tige de poussée (44), la jupe (14) du piston étant mobile en translation axiale par rapport au moyeu (20) sur une distance prédéterminée (D), un ressort (74) étant disposé entre la jupe (14) et le plongeur (32) et constituant un ressort de rappel de la tige de commande (35) et jouant le rôle d'un ressort de clapet, caractérisé en ce que le plongeur (32) comporte une partie cylindrique (70) coulissant de façon étanche autour d'une partie cylindrique (15) de la jupe (14) du piston, le siège de valve (78) du second passage de valve (76, 78) étant formé sur le moyeu (20) selon un cercle de diamètre égal à ou très voisin de celui de la partie cylindrique (15) de la jupe (14).

2. Servomoteur selon la revendication 1, caractérisé en ce que le moyeu (20) est formé avec une extrémité avant annulaire (48) reçue à coulissement dans une gorge annulaire (50) formée sur la face arrière de la jupe (14).

3. Servomoteur selon la revendication 1, caractérisé en ce que la distance prédéterminée (D) est égale à la distance axiale au repos entre un jonc (52) disposé dans une ouverture (54) formée dans la jupe (14) et un épaulement (90) formé dans le moyeu (20) en regard du jonc (52).

4. Servomoteur selon les revendications 2 et 3, caractérisé en ce que l'ouverture (54) est formée dans une des parois de la gorge annulaire (50) et en ce que l'épaulement (90) est formé dans l'extrémité avant annulaire (48) du moyeu (20).

5. Servomoteur selon l'une quelconque des revendications précédentes, caractérisé en ce qu'au moins un un des sièges de valve (58, 78) est formé par un bourrelet (58, 78) formé sur le moyeu (20) du piston et coopérant avec une surface annulaire (56, 76) formée sur la jupe (14) ou le plongeur (32).

6. Servomoteur selon l'une quelconque des revendications 1 à 4, caractérisé en ce qu'au moins un des sièges de valve (56, 76) est formé par un bourrelet (58, 78) formé sur la jupe (14) ou le plongeur (32) et coopérant avec une surface annulaire formée sur le moyeu (20) du piston.

## Claims

1. Pneumatic brake-booster comprising a casing (10) inside which is a piston formed by a hub (20) and by a skirt (14) and which, with the aid of an unrolling membrane (12), defines a front chamber (16) permanently connected to a partial vacuum source and a back chamber (18) connected selectively to the front chamber (16) when a first valve passage (56, 58) is opened or to the atmosphere when a second valve passage (76, 78) is opened, the first and second valve passages (56, 58; 76, 78) being formed by valve seats (58, 78) co-operating with annular valve surfaces (56, 76), and being actuated by a control rod (35) capable of bearing, through the intermediary of a plunger(32), against one of the faces of a reaction disk (42) securely attached to a push rod (44), the skirt (14) of the piston being movable in axial translation with respect to the hub (20) over a predetermined distance (D), a spring (74) being disposed between the skirt (14) and the plunger (32) and constituting a spring for returning the control rod (35) and acting as a shutter valve spring, characterized in that the plunger (32) includes a cylindrical part (70) sliding in leak-tight manner around a cylindrical part (15) of the skirt (14) of the piston, the valve seat (78) of the second valve passage (76, 78) being formed on the hub (20) following a circle of diameter equal or very close to that of the cylindrical part (15) of the skirt (14).

2. Booster according to claim 1, characterized in that the hub (20) is formed with an annular front end (48) slidable received in an annular groove (50) formed on the back face of the skirt (14).

3. Booster according to claim 1, characterized in that the predetermined distance (D) is equal to the axial distance at rest between a retaining ring (52) disposed in an aperture (54) formed in the skirt (14) and a step (90) formed in the hub (20) facing the retaining ring (52).

4. Booster according to claims 2 and 3, characterized in that the aperture (54) is formed in one of the walls of the annular groove (50) and in that the step (90) is formed in the annular front end (48) of the hub (20).

5. Booster according to any one of the preceding claims, characterized in that at least one one [sic] of the valve seats (58, 78) is formed by a bead (58, 78) formed on the hub (20) of the piston, and co-operating with an annular surface (56, 76) formed on the skirt (14) or the plunger (32).

6. Booster according to any one of claims 1 to 4, characterized in that at least one of the valve seats (56, 76) is formed by a bead (58, 78) formed on the skirt (14) or the plunger (32) and co-operating with an annular surface formed on the hub (20) of the piston.

## Patentansprüche

1. Pneumatischer Bremsunterstützungs-Servomotor mit einem Gehäuse (10), in dessen Inneren sich ein Kolben befindet, der durch eine Habe (20) und eine Schürze (14) gebildet ist und mit Hilfe einer Abrollmembran (12) eine permanent mit einer Unterdruckquelle verbundene vordere Kammer (16) und eine hintere Kammer (18) abgrenzt, die selektiv mit der vorderen Kammer (16) beim Öffnen eines ersten Ventildurchganges (56, 58) oder mit der Atmosphäre beim Öffnen eines zweiten Ventildurchganges (76, 78) verbunden ist, wobei der erste und der zweite Ventildurchgang (56, 58, 76, 78) durch Ventilsitze (58, 78) gebildet sind, die mit ringförmigen Ventilflächen (56, 76) zusammenwirken, und betätigt sind von einer Steuerstange (35), die sich über einen Tauchkolben (32) an einer der Seiten einer fest mit einer Schubstange (44) verbundenen Reaktionsscheibe (42) abstützen kann, wobei die Schürze (14) des Kolbens bezüglich der Nabe (20) axial um einen vorbestimmten weg (D) verschiebbar ist, wobei zwischen der Schürze (14) und dem Tauchkolben (32) eine Feder (74) angeordnet ist, welche eine Rückstellfeder der Steuerstange (35) bildet und die Funktion einer Ventilfeder hat, dadurch gekennzeichnet, daß der Tauchkolben (32) einen zylindrischen Abschnitt (70) umfaßt, der in dichter Weise um einen zylindrischen Abschnitt (15) der Schürze (14) des Kolben gleitet, wobei der Ventilsitz (78) des zweiten Ventildurchganges (76, 78) an der Habe (20) entlang einem Kreis mit einem Durchmesser gebildet ist, der gleich dem Durchmesser des zylindrischen Abschnittes (15) der Schürze (14) ist oder diesem sehr nahe liegt.

2. Servomotor nach Anspruch 1, dadurch gekennzeichnet, daß die Habe (20) mit einem ringförmigen vorderen Ende (48) gebildet ist, das in gleitender Weise in einer an der hinteren Seite der Schürze (14) ausgebildeten ringförmigen Nut (50) aufgenommen ist.

3. Servomotor nach Anspruch 1, dadurch gekennzeichnet, daß der vorbestimmte Weg (D) gleich dem axialen Abstand in der Ruhestellung zwischen einem Ring (52), der in einer in der Schürze (14) ausgebildeten Öffnung (54) angeordnet ist, und einem Absatz (90) ist, der in der Nabe (20) gegenüber dem Ring (52) ausgebildet ist.

4. Servomotor nach den Ansprüchen 2 und 3, dadurch gekennzeichnet, daß die Öffnung (54) in einer der Wände der ringförmigen Nut (50) ausgebildet ist und daß der Absatz (90) in dem vorderen ringförmigen Ende (48) der Nabe (20) ausgebildet ist.

5. Servomotor nach einem der vorhergehenden Ansprüche, dadurch gekennzeichnet, daß wenigstens einer der Ventilsitze (58, 78) durch einen Wulst (58, 78) gebildet ist, der an der Nabe (20) des Kolbens ausgebildet ist und mit einer ringförmigen Fläche (56, 76) zusammenwirkt, die an der Schürze (14) oder dem Tauchkolben (32) ausgebildet ist.

6. Servomotor nach einem der Ansprüche 1 bis 4, dadurch gekennzeichnet, daß wenigstens einer der Ventilsitze (56, 76) durch einen Wulst (58, 78) gebildet ist, der an der Schürze (14) oder dem Tauchkolben (32) ausgebildet ist und mit einer an der Nabe (20) des Kolbens ausgebildeten ringförmigen Fläche zusammenwirkt.
